Europäisches Patentamt

(19) European Patent Office

Office européen des brevets

(11) Veröffentlichungsnummer : **0 141 307**
**B1**

(12) **EUROPÄISCHE PATENTSCHRIFT**

(45) Veröffentlichungstag der Patentschrift :
28.03.90

(51) Int. Cl.⁵ : **G 02 B   6/44**

(21) Anmeldenummer : **84112082.7**

(22) Anmeldetag : **09.10.84**

(54) Optisches Kabel.

(30) Priorität : 21.10.83 DE 3338263

(43) Veröffentlichungstag der Anmeldung :
15.05.85 Patentblatt 85/20

(45) Bekanntmachung des Hinweises auf die Patenterteilung : 28.03.90 Patentblatt 90/13

(84) Benannte Vertragsstaaten :
DE GB SE

(56) Entgegenhaltungen :
EP—A— 0 033 103
EP—A— 0 072 423
DE—A— 2 709 083
DE—A— 2 842 077
DE—A— 2 948 896
IEEE GLOBAL TELECOMMUNICATIONS CONFE-
RENCE, CONFERENCE RECORD, Miami, US, 29.
November - 2. Dezember 1982, Band 1, Seiten 275-
277, IEEE Catalog number 82CH1819-2, IEEE, New
York, US; P.R. BARK et al.: "Design and performance
of filled fiber optic cables"
7th EUROPEAN CONFERENCE ON OPTICAL COMMU-
NICATION, Copenhagen, DK, 8.-11. September 1981,
Seiten 24.1-24.4, Peter Peregrinus Ltd.; E. MAYR et
al.: "Optical cables with high fiber densities for
subscriber loop applications"

(73) Patentinhaber : ALCATEL N.V.
Strawinskylaan 537 (World Trade Center)
NL-1077 XX Amsterdam (NL)
GB SE
Standard Elektrik Lorenz Aktiengesellschaft
Hellmuth-Hirth-Strasse 42
D-7000 Stuttgart 40 (DE)
DE

(72) Erfinder : Grögl, Ferdinand
Dürrenstrasse 42
D-7141 Oberstenfeld (DE)
Erfinder : Ismat, Niyazi
Paracelsusstrasse 21
D-7000 Stuttgart 80 (DE)
Erfinder : Widler, Hans-Jörg, Dr.
Badstrasse 27
D-7000 Stuttgart 50 (DE)
Erfinder : Schmidt, Wolfgang M.R.
Hirschlandstrasse 52
D-7250 Leonberg 6 (DE)

(74) Vertreter : Graf, Georg Hugo, Dipl.-Ing. et al
Standard Elektrik Lorenz AG Patent- und Lizenzwesen Postfach 30 09 29
D-7000 Stuttgart 30 (DE)

**Beschreibung**

Die Erfindung bezieht sich auf ein optisches Kabel und auf ein Verfahren zum Herstellen desselben.

Aus der DE-OS 31 12 422 ist ein optisches Nachrichtenkabel bekannt, das innerhalb eines zugfesten Mantels aus einem gehärteten Harzsystem als Matrix mit darin eingebetteten und davon durchtränkten, orientierten Verstärkungsfasern als Armierung eine Lage aus zwei Lichtwellenleitern und zwei Blindelementen mit einer Bewicklung aus einer Kunststoffolie aufweist. Wird dieses Kabel als Luftkabel eingesetzt, so kann bei einer extremen Belastung, beispielsweise bei großer Eislast, eine Dehnung des Mantels von etwa 0,5 bis 2 % auftreten. Hierdurch wird Druck auf die Lichtwellenleiter ausgeübt, der einen Anstieg der Dämpfung der Lichtwellenleiter zur Folge hat.

Damit bei Schrumpfungseffekten im Kabelmantel ein Dämpfungsanstieg oder gar Bruch der Lichtwellenleiter vermieden wird, ist bei einem aus der EP-A-0 072 423 bekannten optischen Nachrichtenkabel ein aus Kunststofffasern bestehendes zugfestes Zentralelement vorgesehen, um das Lichtwellenleiter und Blindelemente verseilt sind. Darüber befindet sich eine Beschichtung aus Schaumfolie und den Abschluß der Kabelseele bildet ein Schlauch, den ein zugfester Außenmantel umgibt.

Die DE-A-27 09 083 beschreibt ein optisches Kabel mit einem querelastischen Kern aus Schaumstoff, um den mit Abstand zueinander Kammern bildende Trennelemente mit Zugspannung und in den Kammern lose geführte Lichtwellenleiter verseilt sind. Die Trennelemente drücken sich beim Verseilen in den Kern etwas ein und sind dadurch unverrutschbar festgelegt. Da die Trennelemente einen wesentlich größeren Durchmesser haben als die Lichtwellenleiter, bleiben die Kammern auch nach Herstellung der äußeren Deckschicht ausreichend geräumig, um bei Zug-, Druck- und Biegebeanspruchungen des Kabels, den lose in den Kammern liegenden Lichtwellenleitern einen Längenausgleich zu ermöglichen.

Aus der DE-A-29 48 896 ist ein optisches Kabel bekannt, das häufig trommelbar ist und gegen Torsionsbeanspruchungen geschützt ist. Es enthält ein aus hoch zugfesten Kunststoffasern gebildetes Zentralelement, auf dem ein Geflecht aus Kunststoff- oder Glasfasern angeordnet ist. Um dieses Geflecht sind wiederkehrend ein Lichtwellenleiter, ein Füllelement und ein Blindelement verseilt. Anstelle von Blindelementen können bedarfsweise auch weitere Lichtwellenleiter vorgesehen sein. Jeder Lichtwellenleiter kommt somit zwischen zwei jeweils aus geflochtenen Glasfaserschnüren bestehenden Füllelementen zu liegen, die den mit üblicher Zugspannung verseilten Lichtwellenleiter als Polster dienen. Die Lichtwellenleiter, die Blind- und die Füllelemente, sind ferner mit einer Bandbewicklung versehen, über der noch ein Geflecht aus Kunststoffasern und über diesem ein Außenmantel angeordnet ist.

Schließlich ist aus der Druckschrift « IEEE Global Telecommunications Conference — Conference Record — Miami, US, 29. Nov.-2. Dez. 1982, Band 1, Seiten 275-277 » noch ein optisches Kabel bekannt, bei dem sowohl das Zentralelement wie die darüber angeordneten Blindelemente aus Röhrchen bestehen, die während der ganzen Lebensdauer des Kabels unter pneumatischen Druck stehen. Zwischen zwei Blindelementen ist hier jeweils ein in Schutzröhrchen liegendes Bündel Lichtwellenleiter angeordnet.

Der Erfindung liegt die Aufgabe zugrunde, ein optisches Kabel mit einem zugfesten Mantel anzugeben, dessen Lichtwellenleiter bei Dehnung des Mantels nicht gedämpft werden.

Eine weitere Aufgabe besteht in der Angabe eines Verfahrens zum Herstellen eines optischen Kabels.

Die Lösung der erstgenannten Aufgabe geschieht durch die im Anspruch 1 angegebenen Mittel. Eine weitere Lösung dieser Aufgabe ist im Anspruch 2 angegeben. Vorteilhafte Ausbildungen der genannten Lösungen sind den Unteransprüchen zu entnehmen.

Die zweite Aufgabe der Erfindung wird durch die in den Ansprüchen 9 bis 11 angegebenen Verfahrensschritte gelöst.

Die gefundenen Lösungen haben den Vorteil, daß bei einer auftretenden Dehnung des Mantels die Lichtwellenleiter die Blindelemente und das Zentralelement verdrängen oder komprimieren. Dadurch können die Lichtwellenleiter einen kleineren Mittenkreisdurchmesser einnehmen und hierbei die aufgetretene Längenänderung ausgleichen. Bei entsprechender Wahl des Verseilfaktors können je nach Verseildurchmesser mehrere Prozent Längenänderung ausgeglichen werden.

Die Erfindung wird nun anhand eines in einer Zeichnung dargestellten Ausführungsbeispieles näher erläutert, deren Figur einen Querschnitt durch ein optisches Kabel mit einem stark komprimierbaren Zentralelement zeigt.

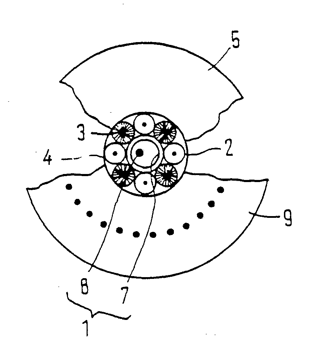

Das in der Figur dargestellte optische Kabel weist ein komprimierbares Zentralelement 1 auf. Darüber sind Lichtwellenleiter 2 abwechselnd mit Blindelementen 3 in einer Lage verseilt. Im dargestellten Beispiel sind vier Lichtwellenleiter 2 abwechselnd mit vier Blindelementen 3 verseilt. Die Blindelemente 3 bestehen aus einem stark komprimierbaren Polsterelement, z. B. aus Flockgarn. Um diese verseilte Lage aus Lichtwellenleitern und Blindelementen ist als Druckpolster eine Kunststoffolie 4, beispielsweise eine Kunststoffschaumfolie, gewickelt. Darüber ist ein zugfester Mantel 5 angeordnet, der beispielsweise aus einem gehärteten Harzsystem als Matrix mit darin eingebetteten und davon durchtränkten, orientierten Verstärkungsfasern als Armierung bestehen kann. Der Mantel 5 kann von einem Schutzmantel aus mit Ruß versetztem Polyäthylen umgeben sein.

Die aus Flockgarnen bestehenden Blindelemente 3 können bei der Herstellung des optischen Kabels mit einem möglichst feinkörnigen Quellpulver versehen werden. Das Quellpulver wird vom Flockgarn sehr gut aufgenommen und es dehnt sich bei Berührung mit Wasser sehr stark aus, was zu einer totalen Abdichtung des optischen Kabels führt.

Bei einer Dehnung des Mantels 5 können die Lichtwellenleiter 2 durch Verdrängen des Zentralelementes 1 und der Blindelemente 3 einen kleineren Mittenkreisdurchmesser einnehmen. Hierbei wird keine große Kraft auf die Lichtwellenleiter ausgeübt und es ergibt sich für die Kabelseele ein Längenzuwachs, der der Dehnung des Mantels 5 entspricht. In den Mantel 9 kann auch eine Lage Glasfaser- oder Kunststoffasergarn eingebettet sein (untere Hälfte der Fig.). Das gezeigte optische Kabel weist als Komprimierbares Zentralelement 1 ein dünnwandiges, z. B. aufblasbares Röhrchen 7 mit einem darin befindlichen Zugentlastungselement 8 auf.

Beim Herstellen dieses optischen Kabels wird beim Verseilen der Lichtwellenleiter 2 und der Blindelemente 3 das Zentralelement 1 unter pneumatischen Druck gesetzt. Dadurch ist das Röhrchen in seiner Form stabil und das Verseilen der Lichtwellenleiter 2 und der Blindelemente 3 bereitet keine Schwierigkeiten. Nach der Fertigstellung des Kabels wird der pneumatische Druck abgelassen, so daß das aus dem Röhrchen 7 gebildete Zentralelement leicht komprimierbar ist.

Wie zum optischen Kabel gemäß Fig. beschrieben, können die Lichtwellenleiter 2 bei einer Dehnung des Mantels 5 oder 9 einen kleineren Mittenkreisdurchmesser einnehmen und dadurch einen Längenausgleich bewirken.

Die Blindelemente 3 können anstatt aus den Flockgarnen auch aus dünnwandigen, aufblasbaren Röhrchen bestehen. Auch diese werden dann beim Verseilen unter pneumatischen Druck gesetzt, der nach der Herstellung des optischen Kabels abgelassen wird.

Die Röhrchen für das Zentralelement 1 oder die Blindelemente 3 können aus einem Schlauch aus thermoplastischem Kautschuk (TPR) bestehen.

Zur Herstellung des Zentralelements 1 kann man auch von einem instabilen Kunststoff ausgehen, der im fertigen Zustand des optischen Kabels einen gelartigen Zustand aufweist. Hierzu besteht das Zentralelement 1 beispielsweise aus einem Röhrchen aus Polyvinylchlorid (PVC) mit einem Weichmachergehalt von 15 bis 25 %. Dieses Röhrchen wird nach dem Verseilvorgang und der Mantelextrusion mit einem Weichmacher gefüllt. Anschließend wird das optische Kabel bei etwa 70 °C einige Stunden getempert, wodurch das PVC des Röhrchens weich wird und in einen gelartigen Zustand übergeht. In das Röhrchen kann nach dem Verseilvorgang des optischen Kabels auch eine geeignete Flüssigkeit oder ein geeignetes Gas eingeleitet werden und dadurch das Material des Röhrchens in einen gelartigen Zustand gebracht werden.

In einer weiteren Ausführungsform ist in dem das Zentralelement 1 bildenden Röhrchen ein gelochtes Innenröhrchen aus chemisch beständigem Kunststoff vorhanden (nicht dargestellt). In dieses Innenröhrchen wird die geeignete Flüssigkeit oder das geeignete Gas eingeleitet. Hierdurch wird sichergestellt, daß ein eventuelles Kollabieren des Röhrchens die Flüssigkeit oder Gasspeisung nicht unterbricht.

**Patentansprüche**

1. Optisches Kabel mit einer Kabelseele, bei der auf einem komprimierbaren oder verdrängbaren Zentralelement (1), das aus einem dünnwandigen, aufblasbaren Röhrchen (7) besteht, ohne Vorspannung eine verseilte Lage aus sich lückenlos abwechselnden Lichtwellenleitern (2) und komprimierbaren oder verdrängbaren Blindelementen (3) ähnlichen Querschnitts angeordnet ist und bei dem die Kabelseele mit einer Bewicklung (4) abschließt, die einen zugfesten Mantel (5, 9) trägt.

2. Optisches Kabel mit einer Kabelseele, bei der auf einem komprimierbaren oder verdrängbaren Zentralelement (1), das aus einem sich mindestens teilweise in einem gelartigen Zustand befindlichen Röhrchen (7) besteht, ohne Vorspannung eine verseilte Lage aus sich lückenlos abwechselnden Lichtwellenleitern (2) und komprimierbaren oder verdrängbaren Blindelementen (3) ähnlichen Querschnitts angeordnet ist und bei dem die Kabelseele mit einer Bewicklung (4) abschließt, die einen zugfesten Mantel (5, 9) trägt.

3. Optisches Kabel nach Anspruch 1, dadurch gekennzeichnet, daß das Röhrchen (7) ein Schlauch aus thermoplastischem Kautschuk ist.

4. Optisches Kabel nach Anspruch 2, dadurch gekennzeichnet, daß das Röhrchen (7) aus Polyvinylchlorid (PVC) mit 15 bis 25 % Weichmachergehalt besteht.

5. Optisches Kabel nach Anspruch 2, dadurch gekennzeichnet, daß in dem Röhrchen (7) ein gelochtes Innenröhrchen aus chemisch beständigem Kunststoff vorhanden ist.

6. Optisches Kabel nach Anspruch 1 oder 2, dadurch gekennzeichnet, daß die Blindelemente (3) aus dünnwandigen, aufblasbaren Röhrchen bestehen.

7. Optisches Kabel nach Anspruch 1 oder 2, dadurch gekennzeichnet, daß die Blindelemente (3) aus Flockgarnen bestehen.

8. Optisches Kabel nach Anspruch 7, dadurch gekennzeichnet, daß die Flockgarne mit einem Quellpulver versehen sind, das bei Berührung mit Wasser aufquillt.

9. Verfahren zur Herstellung eines optischen Kabels nach Anspruch 1 und 6, bei dem zuerst die Röhrchen (7) von Zentralelement (1) und Blindelementen (3) pneumatisch aufgeblasen und danach die Blindelemente (3) abwechselnd mit den Lichtwellenleitern (2) ohne Vorspannung um das Zentralelement (1) verseilt werden, und bei dem anschließend die verseilte Lage umwickelt und auf die Bewicklung der Mantel (5, 9) extrudiert und nach Fertigstellung der pneumatische Druck abgelassen wird.

10. Verfahren zur Herstellung eines optischen Kabels nach Anspruch 2, bei dem um das aus einem Röhrchen (7) bestehende Zentralelement (1) ohne Vorspannung abwechselnd Lichtwellenleiter (2) und Blindelemente (3) verseilt werden und bei dem anschließend die verseilte Lage umwickelt und auf die Bewicklung der Mantel (5, 9) extrudiert wird, wonach in das Zentralelement (1) eine Flüssigkeit oder ein Gas eingeleitet wird, die oder welches das Röhrchen (7) in einen gelartigen Zustand bringen.

11. Verfahren zur Herstellung eines optischen Kabels nach Anspruch 4, bei dem um das aus einem Röhrchen (7) bestehende Zentralelement (1) ohne Vorspannung abwechselnd Blindelemente (3) und Lichtwellenleiter (2) verseilt werden und bei dem anschließend die verseilte Lage umwickelt und auf die Bewicklung der Mantel (5, 9) extrudiert wird und bei dem schließlich in das Röhrchen (7) ein Weichmacher eingefüllt und das Kabel dann bei etwa 70 °C einige Stunden getempert wird.

## Claims

1. Optical cable with a cable core wherein, on a compressible or displaceable central element (1) which consists of a thin-walled, inflatable tube (7), there is disposed, without prestressing, a stranded layer consisting of optical waveguides (2) and compressible or displaceable dummy elements (3) of similar cross section alternating without gaps and in which the cable core is finished off with a wrapping (4) which has on it a tension-proof cable sheath (5, 9).

2. Optical cable with a cable core wherein, on a compressible or displaceable central element (1) which consists of a tube (7) which is at least partly in a gel-like state, there is disposed, without prestressing, a stranded layer consisting of optical waveguides (2) and compressible or displaceable dummy elements (3) of similar cross section alternating without gaps and in which the cable core is finished off with a wrapping (4) which has on it a tension-proof cable sheath (5, 9).

3. Optical cable as claimed in Claim 1, characterized in that the tube (7) is made of thermoplastic rubber.

4. Optical cable as claimed in Claim 2, characterized in that the tube (7) consists of polyvinyl chloride (PVC) with a 15 to 25 % plasticizer content.

5. Optical cable as claimed in Claim 2, characterized in that, within the tube (7), there is a perforated internal tube of a chemically resistant plastic material.

6. Optical cable as claimed in Claim 1 or 2, characterized in that the dummy elements (3) consist of thin-walled inflatable tubes.

7. Optical cable as claimed in Claim 1 or 2, characterized in that the dummy elements (3) consist of flock yarns.

8. Optical cable as claimed in Claim 7, characterized in that the flock yarns are provided with a swelling powder which swells up on contact with water.

9. Method of manufacturing an optical cable as claimed in Claims 1 and 6 in which, first, the tubes (7) of the central element (1) and dummy elements (3) are pneumatically inflated and thereafter the dummy elements (3) are alternately stranded with the optical waveguides (2) without prestressing around the central element (1) and wherein the stranded layer is then wrapped round and extruded on to the wrapping of the sheaths (5, 9) and the pneumatic pressure is let off after completion.

10. Method of manufacturing an optical cable as claimed in Claim 2, wherein, without prestressing, optical waveguides (2) and dummy elements (3) are alternately stranded around the central element (1) consisting of a tube (7) and wherein the stranded layer is then wrapped round and extruded on the wrapping of the sheaths (5, 9), after which a liquid or a gas which brings the tube (7) into a gel-like state is introduced into the central element (1).

11. Method of manufacturing an optical cable as claimed in Claim 4, wherein, without prestressing, dummy elements (3) and optical waveguides (2) are alternately stranded around the central element (1) consisting of a tube (7) and wherein the stranded layer is then wrapped round and extruded on the wrapping of the sheaths (5, 9) and wherein finally a plasticizer is filled into the tubes (7) and the cable is then tempered for a few hours at about 70 °C.

## Revendications

1. Câble optique comprenant une âme de câble dans laquelle est disposée, sur un élément central (1) compressible ou susceptible d'être refoulé et constitué par un tube (7) gonflable à paroi mince, une couche de fibres optiques (2) et d'éléments de remplissage (3) compressibles ou susceptibles d'être refoulés de section analogue, lesdits fibres optiques et lesdits éléments de remplissage étant disposés en ordre alternatif étroitement juxtaposés et toronnés sans précontrainte, l'âme de câble étant entourée d'une couche de revêtement (4) qui porte une enveloppe (5, 9) résistante à la traction.

2. Câble optique comprenant une âme de câble dans laquelle sur un élément central (1) compressible ou susceptible d'être refoulé et constitué par un tube (7) qui est au moins partiellement à l'état de gel, est disposée sans précontrainte une couche toronnée de fibres optiques (2) et d'élément de remplissage (3) compressibles ou susceptibles d'être refoulés de section analogue, lesdites fibres et lesdits éléments étant disposés en ordre alternatif et étroitement juxtaposés et l'âme de câble étant enfermée dans une couche de revêtement (4) qui porte une enveloppe (5, 9) résistante à la traction.

3. Câble optique selon la revendication 1, caractérisé en ce que le tube (7) est constitué par un tuyau de caoutchouc thermoplastique.

4. Câble optique selon la revendication 2, caractérisé en ce que le tube (7) est formé de chlorure de polyvinyle (PVC) renfermant de 15 à 25 % de plastifiant.

5. Câble optique selon la revendication 2, caractérisé en ce que le tube (7) renferme un tube intérieur perforé formé d'une matière synthétique chimiquement stable.

6. Câble optique selon la revendication 1 ou 2, caractérisé en ce que les éléments de remplissage (3) sont constitués par des tubes gonflables à paroi mince.

7. Câble optique selon la revendication 1 ou 2, caractérisé en ce que les éléments de remplissage (3) sont constitués de filasse en bourres.

8. Câble optique selon la revendication 7, caractérisé en ce que la filasse en bourres renferme un agent de gonflement pulvérulent qui gonfle au contact de l'eau.

9. Procédé de fabrication d'un câble optique selon les revendications 1 et 6, dans lequel on gonfle d'abord pneumatiquement les tubes (7) de l'élément central (1) et des éléments de remplissage (3) on toronne ensuite alternativement les éléments de remplissage (3) et les fibres optiques (2) sans précontrainte, autour de l'élément central (1), après quoi on enroule un revêtement autour de la couche toronnée, on extrude sur le revêtement l'enveloppe (5, 9) et on relâche la pression pneumatique après l'achèvement des opérations.

10. Procédé de fabrication d'un câble optique selon la revendication 2, dans lequel on toronne sans précontrainte, autour de l'élément central (1) constitué par un tube (7), des fibres optiques (2) et des éléments de remplissage (3) en ordre alternatif, et dans lequel on enroule ensuite la couche toronnée et on extrude sur l'enroulement l'enveloppe (5, 9), après quoi on introduit dans l'élément central (1) un liquide ou un gaz qui amène le tube (7) à l'état de gel.

11. Procédé de fabrication d'un câble optique selon la revendication 4, dans lequel on toronne sans précontrainte autour de l'élément central (1) constitué par un tube (7) des éléments de remplissage (3) et des fibres optiques (2) en ordre alternatif, et dans lequel on enroule ensuite la couche toronnée et on extrude sur l'enroulement l'enveloppe (5, 9), puis on introduit dans le tube (7) un plastifiant et l'on soumet ensuite le câble à un traitement thermique à environ 70 °C pendant plusieurs heures.

EP 0 141 307 B1